# FASCICULE DE BREVET EUROPEEN

(11) **EP 3 501 657 B1**
(45) Date de publication et mention de la délivrance du brevet: **04.11.2020**
(21) Numéro de dépôt: 19157296.5
(22) Date de dépôt: 17.04.2013
(51) Int. Cl.: B01L 99/00, B01L 3/00, G01N 35/10, B08B 3/04

(54) **PROCÉDÉ POUR NETTOYER DES PUITS À ÉCHANTILLONS DE TEST ET TÊTE DE NETTOYAGE EN FAISANT APPLICATION**
VERFAHREN ZUR REINIGUNG VON TESTPROBENVERTIEFUNGEN UND REINIGUNGSKOPF ZUR DURCHFÜHRUNG DIESES VERFAHRENS
METHOD FOR CLEANING TEST SAMPLE WELLS, AND CLEANING HEAD USING SAID METHOD

(30) Priorité: 19.04.2012 FR 1253607
(43) Date de publication de la demande: 26.06.2019
(62) Demande divisionnaire de: 13722495.2
(73) Titulaire: bioMérieux, 69280 Marcy l'Etoile (FR)
(72) Inventeur: FOUCAULT, Frédéric, 69280 MARCY L'ETOILE (FR)

(56) Documents cités:
- JP-A- 2007 326 072
- JP-A- 2009 236 838
- US-A- 3 949 771
- US-A- 4 341 568
- US-A1- 2005 058 577

## Description

La présente invention concerne le domaine technique des systèmes micro-fluidiques au sens général et elle vise plus particulièrement le domaine des cartes tests pour analyses dans lesquelles sont aménagés des canaux d'alimentation de fluide jusqu'à des puits adaptés pour recevoir un réactif et un échantillon de fluide ou de test contenant des analytes à détecter, représentatifs d'une maladie ou de la présence de microorganismes.

L'objet de l'invention vise plus précisément les moyens techniques adaptés pour nettoyer les puits de telles cartes tests.

L'état de la technique a proposé divers dispositifs pour nettoyer les puits de carte test. Par exemple, le brevet US 4 635 665 décrit un dispositif de nettoyage comportant au moins une tête de lavage à deux tubes coaxiaux destinée à être introduite à l'intérieur du puits à nettoyer pour s'étendre à proximité du fond du puits. La tête de nettoyage comporte un tube de nettoyage délivrant à son extrémité libre un fluide de nettoyage et un tube d'aspiration monté concentriquement à l'intérieur du tube de nettoyage et adapté pour aspirer le fluide de nettoyage souillé. Les extrémités voisines du tube d'aspiration et du tube de nettoyage sont situées dans un même plan pour assurer une aspiration efficace. L'injection du liquide de nettoyage au centre de la tête et l'aspiration du liquide souillé à la périphérie de la tête ne permettent pas de garantir une récupération totale du liquide souillé.
On connait également du document JP2009236838, un procédé de récupération d'échantillon pour aspirer et extraire un échantillon de la pluralité de puits disposés sur un substrat de puits.
En outre, on connait du document JP2007326072, un mécanisme de récupération de microéchantillons, la périphérie externe de chaque micro-puits du substrat étant formée avec au moins une partie de rainure ayant une largeur suffisamment petite pour empêcher le microéchantillon de pénétrer le long de la circonférence du micro-puits.
On connait également du document US4341568, un dispositif et un procédé pour laver un objet dans un récipient. Le dispositif comprend une partie d'extrémité pouvant être introduite et coopérant avec le réceptacle pour définir un espace sensiblement fermé contenant l'objet à laver. Le fluide est introduit dans et aspiré de l'espace sensiblement fermé de telle sorte que l'objet est mobile dans le fluide entre la partie d'extrémité et le réceptacle.
De plus, on connait du document US2005058577, des têtes et des dispositifs de retrait de matériau pour retirer de manière non invasive des matériaux des puits de plaques à puits multiples.

Le brevet US 5 882 597 décrit un dispositif de nettoyage comportant une série de têtes de nettoyage comportant chacune un tube de nettoyage communiquant avec une chambre de stockage d'un fluide de nettoyage et délivrant à son extrémité libre, un fluide de nettoyage. Chaque tête de nettoyage comporte également un tube d'aspiration monté à l'intérieur de chaque tube de nettoyage pour aspirer le fluide de nettoyage souillé à partir de son extrémité libre qui dépasse de l'extrémité libre du tube de nettoyage. La partie terminale du tube de nettoyage est épanouie pour assurer la sortie du liquide sous une forme annulaire afin d'assurer l'étanchéité évitant la remontée d'air dans la chambre de stockage. La tête de nettoyage est déplacée afin de pénétrer à l'intérieur du puits à nettoyer.

Il apparaît en pratique difficile de respecter le montage coaxial entre les deux tubes de sorte que le fonctionnement correct d'une telle tête de nettoyage ne peut pas être assuré. Par ailleurs, il a été constaté qu'une telle tête de nettoyage ne donne pas satisfaction dans la mesure où elle ne permet pas d'obtenir à coup sûr, un nettoyage efficace des puits.

La présente invention vise donc à remédier aux inconvénients de l'état de la technique en proposant une nouvelle technique de nettoyage des puits d'une carte de test pour analyses, adaptée pour nettoyer complètement et de manière reproductible les puits à échantillon de test d'une carte test pour analyses.

Pour atteindre un tel objectif, l'objet de l'invention vise à proposer un procédé tel que défini dans l'une des revendications 1 à 7.

Un autre objet de l'invention est de proposer un appareil de nettoyage tel que défini dans l'une des revendications 8 à 13.

Diverses autres caractéristiques ressortent de la description faite ci-dessous en référence aux dessins annexés qui montrent, à titre d'exemples non limitatifs, des formes de réalisation de l'objet de l'invention.
La Figure 1 est une vue générale montrant une première variante de réalisation d'une tête de nettoyage selon un aspect de la présente description.
La Figure 2 est une vue en perspective de la tête de nettoyage illustrée à la Fig. 1.
La Figure 3 est une vue en coupe élévation montrant un autre mode de réalisation de la variante de la tête de nettoyage illustrée aux Fig. 1 et 2.
La Figure 4 illustre une autre variante de réalisation d'une tête de nettoyage.
La Figure 5 illustre une vue en perspective en partie arrachée de la variante de réalisation de la tête de nettoyage illustrée à la Fig. 4.
La Figure 6 est une vue en coupe d'une variante de réalisation conforme à l'invention.
La Figure 7 illustre une variante de réalisation du tube d'aspiration faisant partie d'une tête de nettoyage selon un aspect de la présente description.
La Figure 8 illustre une autre variante de réalisation du tube d'aspiration faisant partie d'une tête de nettoyage selon un aspect de la présente description.

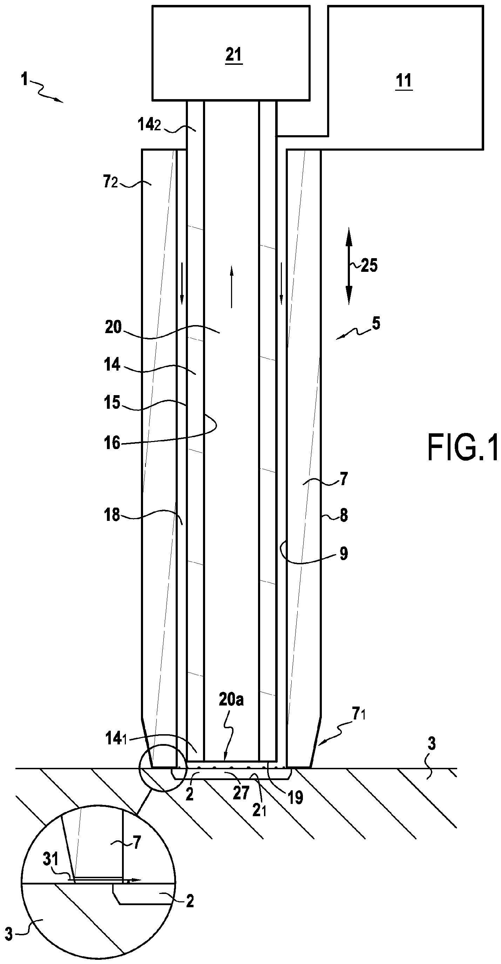

La Fig. 1 illustre à titre d'exemple un appareil de nettoyage 1 pour au moins un puits à échantillon de test 2 aménagé dans une carte test pour analyses 3. L'appareil 1 selon l'invention comporte au moins une tête de nettoyage 5 adaptée pour nettoyer un puits à échantillon de test 2 en une ou plusieurs positions selon la forme du puits, par exemple dans le cas d'un puits de forme oblongue. Dans l'exemple illustré à la Fig. 1, l'appareil 1 comporte une seule tête de nettoyage 5. Bien entendu, il est clair que l'appareil de nettoyage 1 peut comporter une pluralité de têtes de nettoyage 5 disposées par exemple côte à côte en lignes et en colonnes, en nombre et en répartition identiques ou non aux puits à échantillon de test 2 à nettoyer, aménagés sur la carte test pour analyses 3. Par exemple, il peut être prévu de réaliser un appareil de nettoyage 1 comportant 8 ou 12 têtes de nettoyage 5.

Chaque tête de nettoyage 5 comporte un tube de nettoyage 7 présentant par exemple une section transversale circulaire. Le tube de nettoyage 7 comporte une paroi tubulaire extérieure 8 et une paroi tubulaire intérieure 9. Le tube de nettoyage 7 présente une extrémité libre 71 délimitée par une face transversale 10 de forme annulaire assurant la jonction entre la paroi extérieure 8 et la paroi intérieure 9. À titre d'exemple, le diamètre externe du tube de nettoyage 7 est compris entre 0,5 mm et 25 mm et de préférence entre 0,5 mm et 5 mm.

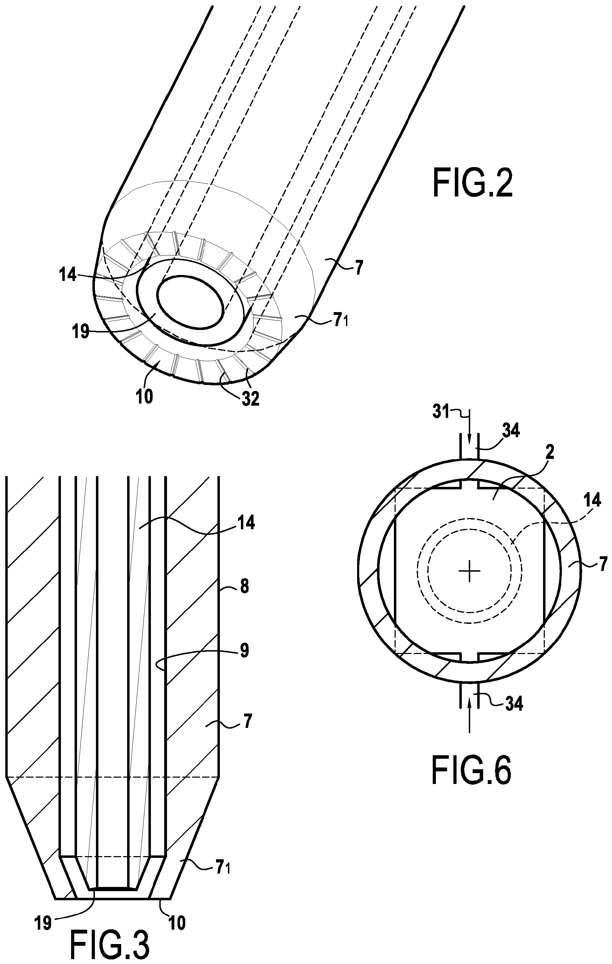

L'extrémité libre 71 du tube de nettoyage 7 peut présenter différentes formes. Ainsi, dans l'exemple illustré aux Fig. 1 et 2, la paroi intérieure 9 du tube de nettoyage 7 présente une section constante sur toute sa longueur alors que la paroi extérieure 8 du tube de nettoyage 7 présente une section constante à l'exception de son extrémité libre 71 qui présente une section décroissante jusqu'à la face transversale 10. La Fig. 3 illustre une autre variante de réalisation selon laquelle la section de la paroi intérieure 9 du tube de nettoyage 7 est constante à l'exception de son extrémité libre qui décroit jusqu'à la face transversale 10.

Le tube de nettoyage 7 présente une extrémité 72 opposée à l'extrémité libre 71 et communiquant avec une source de fluide de nettoyage 11. Par exemple, le fluide de nettoyage utilisé est de l'eau additionnée ou non d'adjuvants, un solvant aqueux et/ou organique, un solvant contenant des protéines, un tampon de lavage pouvant contenir de l'HEPES, du chlorure de sodium, de la BSA (bovine sérum albumine), de la caséine, du PEG (Polyéthylène glycol), de l'azoture de sodium, des tensioactifs comme le Tween® 20, du sucre, etc. Le fluide de nettoyage peut également comprendre des charges telles que talc, particules, corindon, alumine, verre, afin d'ajouter une action mécanique au nettoyage.

La tête de nettoyage 5 comporte également un tube d'aspiration 14 monté à l'intérieur du tube de nettoyage 7 et présentant une section transversale de préférence circulaire. Par exemple, le diamètre externe du tube d'aspiration 14 est compris entre 0,2 mm et 20 mm et de préférence entre 0,2 mm et 4 mm. Le tube d'aspiration 14 comporte une paroi tubulaire extérieure 15 et une paroi tubulaire intérieure 16. Le tube d'aspiration 14 délimite entre sa paroi extérieure 15 et la paroi intérieure 9 du tube de nettoyage 7, un conduit tubulaire 18 d'acheminement du fluide de nettoyage jusqu'à l'extrémité libre 71 du tube de nettoyage 7. De préférence, les tubes d'aspiration 14 et de nettoyage 7 sont montés de manière coaxiale.

Le tube d'aspiration 14 comporte une extrémité libre 141 s'étendant à proximité de l'extrémité libre 71 du tube de nettoyage 7. L'extrémité libre 141 du tube d'aspiration 14 est délimitée par une face transversale 19 se raccordant entre la paroi intérieure 16 et la paroi extérieure 15 du tube d'aspiration 14. Le tube d'aspiration 14 délimite ainsi par sa paroi intérieure 16 un conduit 20 communiquant à partir de l'extrémité 142 opposée à l'extrémité libre 141, avec une source d'aspiration 21 du fluide de nettoyage souillé, aspiré à partir de son extrémité libre 141.

À titre d'exemple, la source d'aspiration 21 est réalisée par une pompe à vide, un venturi ou le vide réseau. D'une manière générale, le débit de la source d'aspiration 21 est supérieur au débit de la source de fluide de nettoyage 11. Le différentiel entre les débits de la source de fluide de nettoyage 11 et de la source d'aspiration 21 dépend en particulier des conditions de fonctionnement et de la géométrie de la tête de nettoyage 5 et des puits à échantillon de test 2 à nettoyer. A titre d'exemple, le ratio du débit de la source d'aspiration sur le débit de la source de fluide de nettoyage 11 est compris entre 300 et 3000.

L'appareil de nettoyage 1 selon l'invention comporte également un système 25 de déplacement relatif entre la tête de nettoyage 5 et la carte test pour analyses 3 de manière que la tête de nettoyage 5 occupe au moins une première position dite de repos dans laquelle la tête de nettoyage est écartée par rapport à la carte test pour analyses 3 et une position de nettoyage pour laquelle le tube de nettoyage 7 assure l'amenée du fluide de nettoyage à l'intérieur du puits et le tube d'aspiration 14 aspire le fluide de nettoyage souillé. Le système de déplacement 25 qui peut être de tous types connus en soi n'est pas décrit plus précisément car il est bien connu de l'homme du métier et ne fait pas partie précisément de l'invention.

Selon une caractéristique avantageuse de réalisation, le système de déplacement 25 est piloté de manière à assurer pour la position de nettoyage, l'appui du tube de nettoyage 7 par sa face transversale 10 sur la carte test pour analyses 3 alors que l'extrémité libre du tube d'aspiration 14 est située au-dessus du fond 21 du puits à échantillon de test 2. Dans cette position de nettoyage, le tube de nettoyage surplombe partiellement ou totalement le puits à échantillon de test 2. Dans cette position de nettoyage, l'extrémité libre et plus précisément la face transversale 19 du tube d'aspiration 14 est située à une distance déterminée du fond du puits à nettoyer 2 pour délimiter avec ce dernier, une zone d'aspiration 27. Avantageusement, en position de nettoyage, la face transversale 19 du tube d'aspiration 14 est située à une distance du fond du puits à nettoyer 2 pouvant aller jusqu'à 2 mm pour des micropuits voire jusqu'à 10 mm pour des microplaques.

Selon une caractéristique préférée de réalisation illustrée aux Fig. 1 à 3, l'extrémité libre 141 du tube d'aspiration 14 est située en retrait par rapport à l'extrémité libre 71 du tube de nettoyage 7. En d'autres termes, la face transversale 19 du tube d'aspiration 14 est située en retrait par rapport à la face transversale 10 du tube de nettoyage 7. Selon une caractéristique avantageuse de réalisation, la face transversale 19 du tube d'aspiration 14 est située en retrait par rapport à la face transversale 10 du tube de nettoyage selon une valeur comprise entre 10 µm et 3 mm et de préférence pour une application de lavage de microplaque par exemple, entre 1 mm et 3 mm et de préférence encore, pour une application de lavage de micropuits entre 10 µm et 300 µm.

Le tube de nettoyage 7 peut être pourvu d'une entrée d'air 31 entre la paroi extérieure 8 et la paroi intérieure 9. Dans l'exemple illustré aux Fig. 1 et 2, l'entrée d'air 31 comporte une série de canaux 32 aménagés sur la face transversale 10 délimitant l'extrémité libre du tube de nettoyage 7. Ces canaux 32 s'étendent radialement entre la paroi extérieure 8 et la paroi intérieure 9 du tube de nettoyage en s'ouvrant sur les parois extérieure 8 et intérieure 9. Les canaux 32 débouchent ou s'ouvrent sur le conduit tubulaire 18 d'acheminement du fluide de nettoyage, qui est délimité par la paroi intérieure 9 du tube de nettoyage 7. Selon une variante préférée de réalisation, illustrée plus particulièrement à la Fig. 2, les canaux 32 sont répartis de manière régulière sur la face transversale 10 du tube de nettoyage 7.

Selon une autre variante de réalisation illustrée plus particulièrement à la Fig. 3, le tube de nettoyage 7 possède une face transversale 10 rugueuse délimitant l'entrée d'air 31 entre la paroi extérieure 8 et la paroi intérieure 9 du tube de nettoyage 7. Selon cette variante de réalisation, il doit être compris que lorsque la face transversale 10 est en appui sur une surface plane, la rugosité de la face transversale 10 est telle que cette dernière présente des parties saillantes délimitant entre elles des passages formant ensemble l'entrée d'air 31 entre les parois extérieure 8 et intérieure 9.

Selon une autre variante de réalisation non représentée, il est à noter que l'entrée d'air 31 peut être réalisée également par des trous aménagés radialement à l'extrémité libre 71 du tube de nettoyage 7 à proximité de la face transversale 10 et débouchant sur la paroi extérieure 8 et la paroi intérieure 9.

La mise en œuvre de la tête de nettoyage 5 découle directement de la description qui précède. Le procédé pour nettoyer un puits à échantillon de test 2 consiste donc à assurer le déplacement relatif entre la tête de nettoyage 5 et la carte test pour analyses 3 de manière à placer la tête de nettoyage 5 dans sa position de nettoyage. Dans cette position, illustrée à la Fig. 1, le tube de nettoyage 7 est en appui par son extrémité libre 71 sur la carte test. Dans cette position, la face transversale 10 du tube de nettoyage 7 est en appui sur au moins une partie du pourtour du puits à échantillon de test 2. Dans cette position, le tube de nettoyage 7 est à même d'injecter le fluide de nettoyage à l'intérieur du puits 2 tandis que le tube d'aspiration 14 se trouve en surplomb du puits 2 pour aspirer le fluide de nettoyage souillé. Dans cette position, il apparaît une entrée d'air 31 entre l'extérieur et l'intérieur du tube de nettoyage 7 par l'intermédiaire par exemple des canaux 32 qui permettent l'acheminement de l'air, de l'extérieur du tube de nettoyage 7 à l'intérieur du puits à échantillon de test 2 à nettoyer.

L'injection du fluide de nettoyage à l'intérieur du tube 7 conduit à sa sortie par l'extrémité libre 71 du tube de nettoyage 7. Simultanément, la source d'aspiration 21 aspire à partir de l'extrémité libre 141 du tube d'aspiration 14 le liquide souillé. Compte tenu de l'entrée d'air 31 réalisée entre l'extérieur et l'intérieur du tube de nettoyage 7, il se produit à l'intérieur du puits à échantillon de test 2, un tourbillon du fluide de nettoyage permettant un nettoyage efficace et complet du puits à échantillon de test 2. Dans la mesure où le tube d'aspiration 14 est situé à l'intérieur du tube de nettoyage 7, il apparaît une bonne récupération du fluide de nettoyage souillé.

Il est à noter que le positionnement de l'extrémité libre 141 du tube d'aspiration 14 par rapport à l'extrémité libre 71 du tube de nettoyage 7 dépend en particulier de la profondeur du puits à échantillon de test 2 à nettoyer. Comme indiqué ci-dessus, l'extrémité libre 141 du tube d'aspiration 14 est avantageusement placée en retrait par rapport à l'extrémité libre 71 du tube de nettoyage 7.

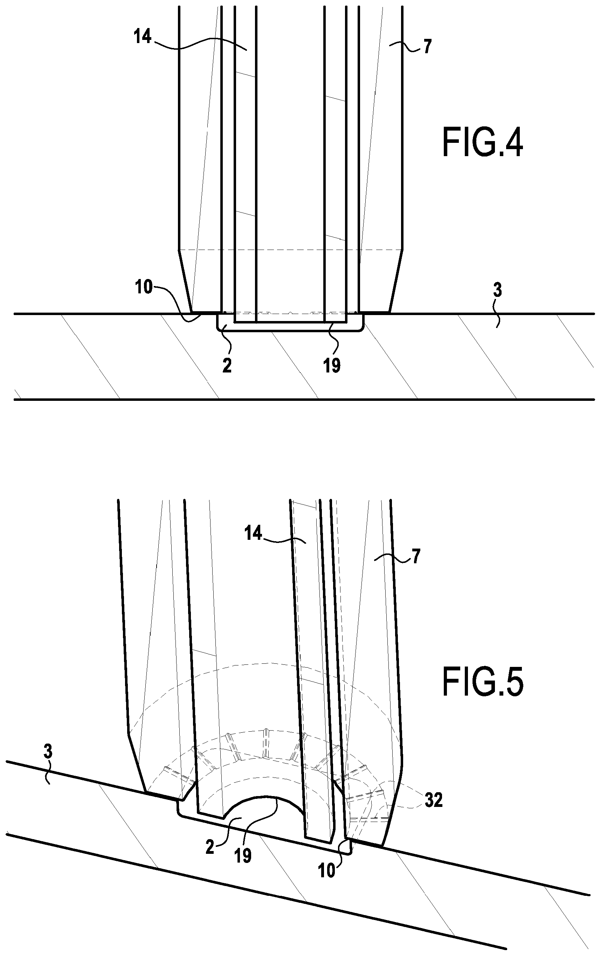

Toutefois, il peut être envisagé de réaliser une tête de nettoyage 5 dans laquelle l'extrémité libre 141 du tube d'aspiration dépasse de l'extrémité libre 71 du tube de nettoyage 7 comme cela apparaît plus précisément aux Fig. 4 et 5. En d'autres termes, la face transversale 19 du tube d'aspiration 14 s'étend en saillie par rapport à la face transversale 10 du tube de nettoyage 7. Une telle disposition peut être ainsi envisagée pour des puits à échantillon de test 2 présentant une profondeur relativement importante permettant de rapprocher l'extrémité libre 141 du tube d'aspiration 14 par rapport au fond 21 du puits à échantillon de test 2. Cette variante de réalisation permet de conserver à la zone d'aspiration 27 une hauteur adaptée pour assurer une bonne aspiration du fluide de nettoyage souillé. Avantageusement, comme indiqué précédemment, en position de nettoyage, la face transversale 19 du tube d'aspiration 14 est située à une distance du fond du puits à nettoyer 2 pouvant aller jusqu'à 2 mm pour des micropuits voire jusqu'à 10 mm pour des microplaques.

Dans les exemples qui précèdent, l'entrée d'air 31 entre l'extérieur et l'intérieur de l'extrémité libre 71 du tube de nettoyage 7 est réalisée par la géométrie du tube de nettoyage 7.

La Fig. 6 illustre un autre exemple de réalisation dans lequel l'entrée d'air 31 est réalisée par la géométrie de la carte test pour analyses 3. Cet exemple correspond à un mode de réalisation compris dans les présentes revendications. Selon cet exemple de réalisation, le puits à échantillon de test 2 communique avec au moins un et dans l'exemple illustré à la Fig. 6, deux conduits 34 aménagés dans la carte test pour analyses 3 et formant l'entrée d'air 31. Ces conduits 34 sont aménagés de manière qu'en position d'appui de l'extrémité libre 71 du tube de nettoyage 7 sur la carte test pour analyses 3, les conduits 34 s'étendent de part et d'autre des parois intérieure 9 et extérieure 8 pour permettre l'entrée d'air à l'intérieur du tube de nettoyage 7. Dans cette position d'appui, le tube de nettoyage 7 entoure ou ferme complètement le puits 2, à l'exception des conduits 34. Le tube de nettoyage 7 assure l'étanchéité entre la tête de nettoyage 5 et la carte test pour analyses 3.

Selon un exemple de réalisation, l'extrémité libre 71 du tube de nettoyage 7 est adaptée pour assurer l'étanchéité avec la carte test pour analyses 3. Selon une variante de réalisation, le tube de nettoyage 7 est muni à son extrémité libre 71, d'un embout souple assurant l'étanchéité avec la carte test. Un tel embout souple permet également d'obtenir un contact doux entre le tube de nettoyage 7 et la carte test pour analyses 3, et de compenser les tolérances du système de déplacement 25 pour assurer le positionnement de la tête de nettoyage 5 dans sa position de nettoyage.

Un tel embout souple peut être rajouté sur l'extrémité libre 71 du tube de nettoyage ou être surmoulé ou co-injecté au niveau de l'extrémité libre 71 du tube de nettoyage 7. Par exemple, l'embout souple peut présenter une dureté comprise entre 20 et 80 Shore A. Un tel embout peut être réalisé en silicone, en élastomères comme les EPDM (Ethylène Propylène Diène Monomer), SBR (Styrène Butadiène Rubber) ... ou autres ou en élastomères thermoplastiques comme les Arnitel®, Pebax®... ou autres.

Bien entendu, il peut être envisagé qu'un tel embout souple puisse délimiter également l'entrée d'air 31 par exemple, en comportant des canaux 32.

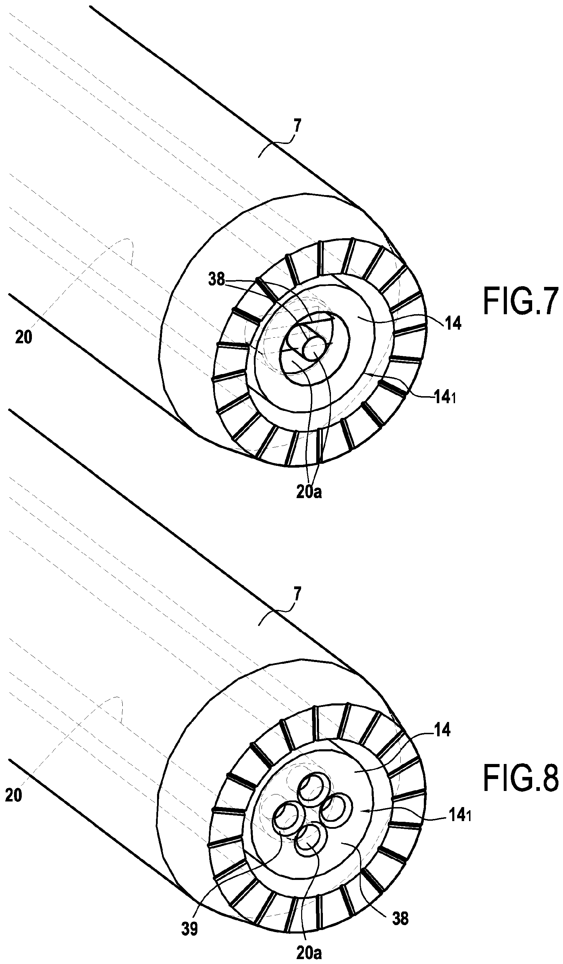

Dans les exemples qui précèdent, le tube d'aspiration 14 comporte intérieurement un conduit 20 s'ouvrant à l'extrémité libre 141, par une seule section d'aspiration 20a, correspondant à la section transversale complète du conduit 20. Les Fig. 7 et 8 illustrent une autre variante de réalisation du tube d'aspiration 14 permettant d'aspirer le fluide de nettoyage souillé à partir de l'extrémité libre 141, selon plusieurs sections d'aspiration 20a séparées les unes des autres par des cloisons 38. Ces sections d'aspiration 20a sont aménagées à l'extrémité libre 141 du tube d'aspiration 14 de manière qu'en position de nettoyage, ces sections d'aspiration 20a se trouvent situées à l'aplomb de spots placés dans le puits à échantillon de test 2. Un tel agencement contribue à renforcer le nettoyage du puits 2 et plus particulièrement dans les zones de dépôt d'un ou de plusieurs produits d'intérêt, appelées spots.

Dans l'exemple illustré à la Fig. 7, le conduit 20 du tube d'aspiration 14 est équipé à l'extrémité libre 141 du tube d'aspiration 14, des cloisons 38 qui sont arrangées de toute manière appropriée pour former une géométrie ou un dessin spécifique. Ces cloisons 38 délimitent des sections d'aspiration 20a qui dans l'exemple illustré à la Fig. 7 sont de formes différentes. La Fig. 8 illustre une autre variante de réalisation dans laquelle, le tube d'aspiration 14 comporte des sections d'aspiration 20a de formes identiques, à savoir circulaire par exemple. Selon cette variante de réalisation, le conduit 20 du tube d'aspiration 14 s'ouvre à l'extrémité libre 141, par exemple, par quatre sections d'aspiration 20a séparées entre elles par les cloisons 38 réalisées par une face transversale fermant l'extrémité libre 141 du tube d'aspiration 14.

Dans l'exemple illustré à la Fig. 8, chaque section d'aspiration 20a est munie d'un cône d'entrée 39 convergeant vers le conduit 20 du tube d'aspiration 14 pour faciliter l'acheminement sélectif du fluide de nettoyage souillé à travers les sections d'aspiration 20a. Bien entendu, il peut être prévu de réaliser les sections d'aspiration 20a de l'exemple illustré à la Fig. 8, sans les cônes d'entrée 39.

Dans les exemples qui précèdent, un déplacement relatif est effectué entre la tête de nettoyage 5 et la carte test pour analyses 3 afin de placer la tête de nettoyage 5 dans une position de nettoyage. Il est à noter qu'il peut être prévu d'assurer le déplacement relatif entre la carte test et la tête de nettoyage de manière à déplacer latéralement la zone d'aspiration à une hauteur déterminée entre l'extrémité libre du tube d'aspiration et le fond du puits lorsque la zone d'aspiration ne permet pas de nettoyer dans une unique position de nettoyage le fond du puits.

L'invention n'est pas limitée aux exemples décrits et représentés car diverses modifications peuvent y être apportées sans sortir de son cadre qui est défini par les revendications jointes.

## Revendications

1. Procédé pour nettoyer au moins un puits à échantillon de test (2), aménagé dans une carte test pour analyses (3), à l'aide d'au moins une tête de nettoyage (5) comportant au moins un tube de nettoyage (7) ayant une paroi extérieure (8) et une paroi intérieure (9) et délivrant à son extrémité libre (71), un fluide de nettoyage, et un tube d'aspiration (14) monté à l'intérieur du tube de nettoyage (7) pour aspirer le fluide de nettoyage souillé à partir de son extrémité libre (141) située à proximité de l'extrémité libre (71) du tube de nettoyage, le procédé consistant à assurer un déplacement relatif entre la carte test (3) et la tête de nettoyage (5), de manière que la carte test occupe une position de nettoyage dans laquelle le tube de nettoyage (7) délivre à son extrémité libre, le fluide de nettoyage à l'intérieur du puits (2) à nettoyer et le tube d'aspiration (14) aspire le fluide de nettoyage souillé, **caractérisé en ce qu'**il consiste, dans la position de nettoyage, à assurer le déplacement relatif entre la carte test (3) et la tête de nettoyage (5) de manière à assurer l'appui de l'extrémité libre (71) du tube de nettoyage (7) sur la carte test (3) en vue de créer une entrée d'air (31) entre l'extérieur et l'intérieur de l'extrémité libre (71) du tube de nettoyage (7) de manière à créer un tourbillon du fluide de nettoyage à l'intérieur du puits (2) à nettoyer, et **en ce qu'**il consiste à aménager la carte test (3) de manière que ladite carte test crée l'entrée d'air (31) lorsque l'extrémité libre (71) du tube de nettoyage (7) est en appui sur la carte test et **en ce que** l'entrée d'air (31) est réalisée par la géométrie de la carte test pour analyses (3).

2. Procédé selon la revendication 1, **caractérisé en ce que** le puits à échantillon de test (2) communique avec au moins un conduit (34) aménagé dans la carte test pour analyses (3) et formant l'entrée d'air 31, ce conduit (34) étant aménagé de manière que, en position d'appui de l'extrémité libre (71) du tube de nettoyage (7) sur la carte test pour analyses (3), le conduit (34) s'étend de part et d'autre des parois intérieure (9) et extérieure (8) du tube de nettoyage (7) pour permettre l'entrée d'air à l'intérieur du tube de nettoyage (7) et **en ce que** dans cette position d'appui de l'extrémité libre (71) du tube de nettoyage (7) sur la carte test pour analyses (3), le tube de nettoyage (7) entoure ou ferme complètement le puits (2) à l'exception des conduits (34).

3. Procédé selon la revendication 1 ou 2, **caractérisé en ce qu'**il consiste à équiper l'extrémité libre (71) du tube de nettoyage (7) à l'aide d'un embout souple qui, assure l'étanchéité avec la carte test lorsque ledit embout est en appui sur la carte test.

4. Procédé selon la revendication 1 ou 2, **caractérisé en ce que** l'appui de l'extrémité libre (71) du tube de nettoyage (7) sur la carte test (3) crée une zone d'aspiration (27) de hauteur déterminée entre l'extrémité libre (14₁) du tube d'aspiration (14) et le fond (21) du puits (2).

5. Procédé selon la revendication 4, **caractérisé en ce qu'**il consiste à créer la zone d'aspiration (27) de hauteur déterminée entre l'extrémité libre (14₁) du tube d'aspiration (14) et le fond (21) du puits (2), avec l'extrémité libre (14₁) du tube d'aspiration (14) dépassant par rapport à l'extrémité libre (71) du tube de nettoyage (7).

6. Procédé selon la revendication 4, **caractérisé en ce qu'**il consiste à créer la zone d'aspiration (27) de hauteur déterminée entre l'extrémité libre (14₁) du tube d'aspiration (14) et le fond (21) du puits (2), avec l'extrémité libre (14₁) du tube d'aspiration (14) s'étendant en retrait par rapport à l'extrémité libre (71) du tube de nettoyage (7).

7. Procédé selon l'une des revendications 1 à 6, **caractérisée en ce qu'**il consiste à aspirer le fluide de nettoyage souillé à partir de l'extrémité libre (14₁) du tube d'aspiration (14), selon plusieurs sections d'aspiration (20a) séparées, situées en position de nettoyage, à l'aplomb de spots placés dans le puits à échantillon de test (2).

8. Appareil de nettoyage comportant une source de fluide de nettoyage (11), une source d'aspiration (21) pour le fluide de nettoyage souillé, au moins une tête de nettoyage (5) et un système de déplacement relatif (25) entre la tête de nettoyage (5) et une carte test pour analyses (3) dans laquelle est aménagé au moins un puits à échantillon de test (2), le système de déplacement (25) étant piloté pour occuper au moins une position de nettoyage du puits, la tête de nettoyage comportant au moins un tube de nettoyage (7) relié à la source de fluide de nettoyage (11) et délivrant, à son extrémité libre (71), le fluide de nettoyage, et un tube d'aspiration (14) monté à l'intérieur du tube de nettoyage (7) et relié à la source d'aspiration (21) et aspirant, à son extrémité libre (14 1) située à proximité de l'extrémité libre (71) du tube de nettoyage (7), le fluide de nettoyage souillé, caractérisé en ce la carte test (3) est aménagée de manière que ladite carte test crée une entrée d'air (31) lorsque l'extrémité libre (71) du tube de nettoyage (7) est en appui sur la carte test et en ce que l'entrée d'air (31) est réalisée par la géométrie de la carte test pour analyses (3).

9. Appareil de nettoyage selon la revendication 8, **caractérisé en ce que** le puits à échantillon de test (2) communique avec au moins un conduit (34) aménagé dans la carte test pour analyses (3) et formant l'entrée d'air 31, ce conduit (34) étant aménagé de manière que, en position d'appui de l'extrémité libre (71) du tube de nettoyage (7) sur la carte test pour analyses (3), le conduit (34) s'étend de part et d'autre des parois intérieure (9) et extérieure (8) du tube de nettoyage (7) pour permettre l'entrée d'air à l'intérieur du tube de nettoyage (7) et **en ce que**, dans cette position d'appui de l'extrémité libre (71) du tube de nettoyage (7) sur la carte test pour analyses (3), le tube de nettoyage (7) entoure ou ferme complètement le puits (2) à l'exception des conduits (34).

10. Appareil de nettoyage selon l'une des revendications 8 ou 9, caractérisé que l'extrémité libre (14₁) du tube d'aspiration (14) est située en retrait par rapport à l'extrémité libre (71) du tube de nettoyage (7).

11. Appareil de nettoyage selon la revendication 10, **caractérisé en ce que** l'extrémité libre (14₁) du tube d'aspiration (14) est située en retrait par rapport à l'extrémité libre (71) du tube de nettoyage (7) selon une valeur comprise entre 10 µm et 300 µm.

12. Appareil de nettoyage selon l'une des revendications 8 à 11, **caractérisé en ce que** le tube de nettoyage (7) est pourvu d'un embout souple formant l'extrémité libre (71) dudit tube de nettoyage (7).

13. Appareil de nettoyage selon l'une des revendications 8 à 12, **caractérisé en ce que** le tube d'aspiration (14) comporte intérieurement un conduit (20) communiquant avec la source d'aspiration (21) et équipé, à l'extrémité libre (14₁), de cloisons (38) délimitant des sections d'aspiration séparées (20a).

## Patentansprüche

1. Verfahren zum Reinigen mindestens einer Testprobenvertiefung (2), die in einer Testkarte für Analysen (3) eingerichtet ist, mit Hilfe mindestens eines Reinigungskopfs (5), der mindestens ein Reinigungsrohr (7), das eine Außenwand (8) und eine Innenwand (9) hat und an seinem freien Ende (71) eine Reinigungsflüssigkeit liefert, und ein Ansaugrohr (14) aufweist, das im Inneren des Reinigungsrohrs (7) montiert ist, um die verschmutzte Reinigungsflüssigkeit ausgehend von seinem freien Ende (141) anzusaugen, das sich in der Nähe des freien Endes (71) des Reinigungsrohrs befindet, wobei das Verfahren darin besteht, eine relative Verschiebung zwischen der Testkarte (3) und dem Reinigungskopf (5) zu gewährleisten, so dass die Testkarte eine Reinigungsposition einnimmt, in der das Reinigungsrohr (7) an seinem freien Ende die Reinigungsflüssigkeit ins Innere der zu reinigenden Vertiefung (2) liefert, und das Ansaugrohr (14) die verschmutzte Reinigungsflüssigkeit ansaugt, **dadurch gekennzeichnet, dass** es in der Reinigungsposition darin besteht, die relative Verschiebung zwischen der Testkarte (3) und dem Reinigungskopf (5) zu gewährleisten, um die Auflage des freien Endes (71) des Reinigungsrohrs (7) auf der Testkarte (3) zu gewährleisten, um einen Lufteingang (31) zwischen dem Äußeren und dem Inneren des freien Endes (71) des Reinigungsrohrs (7) zu erzeugen, um einen Wirbel der Reinigungsflüssigkeit im Inneren der zu reinigenden Vertiefung (2) zu erzeugen, und dass es darin besteht, die Testkarte (3) so einzurichten, dass die Testkarte den Lufteingang (31) erzeugt, wenn das freie Ende (71) des Reinigungsrohrs (7) auf der Testkarte in Auflage ist, und dass der Lufteingang (31) durch die Geometrie der Testkarte für Analysen (3) hergestellt wird.

2. Verfahren nach Anspruch 1, **dadurch gekennzeichnet, dass** die Testprobenvertiefung (2) mit mindestens einem Kanal (34) in Verbindung steht, der in der Testkarte für Analysen (3) eingerichtet ist und den Lufteingang (31) formt, wobei dieser Kanal (34) so eingerichtet ist, dass der Kanal (34) sich in der Auflageposition des freien Endes (71) des Reinigungsrohrs (7) auf der Testkarte für Analysen (3) zu beiden Seiten der Innen- (9) und Außenwände (8) des Reinigungsrohrs (7) erstreckt, um den Lufteingang ins Innere des Reinigungsrohrs (7) zu erlauben, und dass in dieser Auflageposition des freien Endes (71) des Reinigungsrohrs (7) auf der Testkarte für Analysen (3) das Reinigungsrohr (7) die Vertiefung (2) mit Ausnahme der Kanäle (34) umgibt oder vollständig verschließt.

3. Verfahren nach Anspruch 1 oder 2, **dadurch gekennzeichnet, dass** es darin besteht, das freie Ende (71) des Reinigungsrohrs (7) mit Hilfe eines biegsamen Endstücks auszustatten, das die Dichtheit mit der Testkarte gewährleistet, wenn das Endstück auf der Testkarte in Auflage ist.

4. Verfahren nach Anspruch 1 oder 2, **dadurch gekennzeichnet, dass** die Auflage des freien Endes (71) des Reinigungsrohrs (7) auf der Testkarte (3) eine Ansaugzone (27) bestimmter Höhe zwischen dem freien Ende (14₁) des Ansaugrohrs (14) und dem Boden (21) der Vertiefung (2) erzeugt.

5. Verfahren nach Anspruch 4, **dadurch gekennzeichnet, dass** es darin besteht, die Ansaugzone (27) bestimmter Höhe zwischen dem freien Ende (14₁) des Ansaugrohrs (14) und dem Boden (21) der Vertiefung (2) zu erzeugen, wobei das freie Ende (14₁) des Ansaugrohrs (14) bezüglich des freien Endes (71) des Reinigungsrohrs (7) übersteht.

6. Verfahren nach Anspruch 4, **dadurch gekennzeichnet, dass** es darin besteht, die Ansaugzone (27) bestimmter Höhe zwischen dem freien Ende (14₁) des Ansaugrohrs (14) und dem Boden (21) der Vertiefung (2) zu erzeugen, wobei das freie Ende (14₁) des Ansaugrohrs (14) sich bezüglich des freien Endes (71) des Reinigungsrohr (7) zurückgezogen erstreckt.

7. Verfahren nach einem der Ansprüche 1 bis 6, **dadurch gekennzeichnet, dass** es darin besteht, die verschmutzte Reinigungsflüssigkeit ausgehend vom freien Ende (14₁) des Ansaugrohrs (14) gemäß mehreren getrennten Ansaugquerschnitten (20a) anzusaugen, die sich in der Reinigungsposition lotrecht zu Punkten befinden, die in der Testprobenvertiefung (2) platziert sind.

8. Reinigungsgerät, das eine Quelle von Reinigungsflüssigkeit (11), eine Ansaugquelle (21) für die verschmutzte Reinigungsflüssigkeit, mindestens einen Reinigungskopf (5) und ein System zur relativen Verschiebung (25) zwischen dem Reinigungskopf (5) und einer Testkarte für Analysen (3) aufweist, in der mindestens eine Testprobenvertiefung (2) eingerichtet ist, wobei das Verschiebesystem (25) gesteuert wird, um mindestens eine Reinigungsposition der Vertiefung einzunehmen, wobei der Reinigungskopf mindestens ein Reinigungsrohr (7), das mit der Quelle von Reinigungsflüssigkeit (11) verbunden ist und an seinem freien Ende (71) die Reinigungsflüssigkeit liefert, und ein Ansaugrohr (14) aufweist, das im Inneren des Reinigungsrohrs (7) montiert und mit der Ansaugquelle (21) verbunden ist und an seinem freien Ende (14 1), das sich in der Nähe des freien Endes (71) des Reinigungsrohrs (7) befindet, die verschmutzte Reinigungsflüssigkeit ansaugt, **dadurch gekennzeichnet, dass** die Testkarte (3) so eingerichtet ist, dass die Testkarte einen Lufteingang (31) erzeugt, wenn das freie Ende (71) des Reinigungsrohrs (7) auf der Testkarte in Auflage ist, und dass der Lufteingang (31) durch die Geometrie der Testkarte für Analysen (3) hergestellt wird.

9. Reinigungsgerät nach Anspruch 8, **dadurch gekennzeichnet, dass** die Testprobenvertiefung (2) mit mindestens einem Kanal (34) in Verbindung steht, der in der Testkarte für Analysen (3) eingerichtet ist und den Lufteingang (31) formt, wobei dieser Kanal (34) so eingerichtet ist, dass der Kanal (34) sich in der Auflageposition des freien Endes (71) des Reinigungsrohrs (7) auf der Testkarte für Analysen (3) zu beiden Seiten der Innen- (9) und Außenwände (8) des Reinigungsrohrs (7) erstreckt, um den Lufteingang ins Innere des Reinigungsrohrs (7) zu erlauben, und dass in dieser Auflageposition des freien Endes (71) des Reinigungsrohrs (7) auf der Testkarte für Analysen (3) das Reinigungsrohr (7) die Vertiefung (2) mit Ausnahme der Kanäle (34) umgibt oder vollständig verschließt.

10. Reinigungsgerät nach einem der Ansprüche 8 oder 9, **dadurch gekennzeichnet, dass** das freie Ende (14₁) des Ansaugrohrs (14) sich bezüglich des freien Endes (71) des Reinigungsrohrs (7) zurückversetzt befindet.

11. Reinigungsgerät nach Anspruch 10, **dadurch gekennzeichnet, dass** das freie Ende (14₁) des Ansaugrohrs (14) sich bezüglich des freien Endes (71) des Reinigungsrohrs (7) gemäß einem Wert zwischen 10 µm und 300 µm zurückversetzt befindet.

12. Reinigungsgerät nach einem der Ansprüche 8 bis 11, **dadurch gekennzeichnet, dass** das Reinigungsrohr (7) mit einem biegsamen Endstück versehen ist, das das freie Ende (71) des Reinigungsrohrs (7) formt.

13. Reinigungsgerät nach einem der Ansprüche 8 bis 12, **dadurch gekennzeichnet, dass** das Ansaugrohr (14) innen einen Kanal (20) aufweist, der mit der Ansaugquelle (21) in Verbindung steht, und am freien Ende (14₁) mit Trennwänden (38) ausgestattet ist, die getrennte Ansaugquerschnitte (20a) begrenzen.

## Claims

1. A method for cleaning at least one test sample well (2), provided in a diagnostic test card (3), using at least one cleaning head (5) comprising at least one cleaning tube (7) delivering, having an external wall (8) and an internal wall (9) and delivering at its free end (71), a cleaning fluid, and a suction tube (14) mounted within the cleaning tube (7) for aspirating the contaminated cleaning fluid from its free end (141) located in proximity to the free end (71) of the cleaning tube,
the method consisting of providing a relative displacement between the test card (3) and the cleaning head (5), so that the test card occupies a cleaning position wherein the cleaning tube (7) at its free end delivers the cleaning fluid inside the well (2) to be cleaned and the suction tube (14) aspirates the contaminated cleaning fluid, **characterized in that** it consists, in the cleaning position, in providing an air intake (31) between the outside and the inside of the free end (71) of the cleaning tube (7) so as to create a cleaning fluid vortex within the well (2) to be cleaned and **in that** it consists in providing the relative displacement between the test card (3) and the cleaning head (5) so as to provide abutment of the free end (71) of the cleaning tube (7) on the test card (3) and **in that** the air intake (31) is formed by the geometry of the test card for analysis (3).

2. The method according to claim 1, wherein the wells (2) communicate with at least one duct (34) within the test card for analysis (3) and forming an air intake (31), the duct (34) being arranged so that: in abutment position of the free end (71) of the cleaning tube (7) on the test card (3), the duct (34) extending through internal wall (9) and external wall (8) of the cleaning tube (7) in order to allow air intake inside the cleaning tube (7) and wherein in the said abutment position of the free end (71) of the cleaning tube (7) on the test card (3), the cleaning tube (7) surrounds or close the well (2) except the ducts (34).

3. The method according to claim 1 or 2, wherein it consists of equipping the free end (71) of the cleaning tube (7) with a flexible tip which provides a seal with the test card when said tip is in abutment on the test card.

4. The method according to claim 1 or 2, wherein the abutment of the free end (71) of the cleaning tube (7) on the test card (3) creates a suction zone (27) with a predetermined height between the free end (141) of the suction tube (14) and the bottom (21) of the well (2).

5. The method according to claim 4, wherein it consists in creating a suction zone (27) with a predetermined height between the free end (141) of the suction tube (14) and the bottom (21) of the well (2) with the free end (141) of the suction tube (14) protruding relative to free end (71) of the cleaning tube (7).

6. The method according to claim 4, wherein it consists of creating the suction zone (27) with a predetermined height between the free end (141) of the suction tube (14) and the bottom (21) of the well (2), with the free end (141) of the suction tube (14) set back with respect to the free end (71) of the cleaning tube (7).

7. The method according to any of the claims 1 to 6, wherein it consists of aspirating the contaminated cleaning fluid at the free end (141) of the suction tube (14), at several separate suction sections (20a) located, in the cleaning position, vertically above spots placed in the test sample well (2).

8. A cleaning device comprising a cleaning fluid source (11), a suction source (21) for the contaminated cleaning fluid, at least one cleaning head (5) and a system for relative displacement (25) between the cleaning head (5) and a test card (3) wherein is provided at least one test sample well (2), the displacement system (25) being controlled to occupy at least one position for cleaning the well, the cleaning head (5) comprising at least one cleaning tube (7) connected to a cleaning fluid source (11) and providing at its free end (71), the cleaning fluid and suction tube (14) mounted inside the cleaning tube (7) and connected to the suction source (21) and suctioning the contaminated cleaning fluid at its free end (141) positioned in the vicinity of the free end (71) of the cleaning tube (7).

9. Cleaning device according to claim 8, wherein the sample test well (2) communicate with at least one duct (34) arranged in the test card (3) and the creating air intake (31), the duct (34) being arranged so that in the abutment position of the free end (71) of the cleaning tube (7) on the test card (3), the duct (34) extending through internal wall (9) and external wall (8) of the cleaning tube (7) in order to allow air to come through the air intake inside the cleaning tube (7) and wherein in the abutment position of the free end (71) of the cleaning tube (7) on the test card (3), the cleaning tube (7) surrounds or closes totally the well (2) except ducts (34).

10. Cleaning device according to any of the claims 8 or 9, wherein the free end (141) of the suction tube (14) is positioned in setback relative to the free end (71) of the cleaning tube (7).

11. Cleaning device according to claim 10, wherein the free end (141) of the suction tube (14) is positioned in setback relative to the free end (71) of the cleaning tube (7) according to a value comprised between 10 µm and 300 µm.

12. Cleaning device according to any of the claims 8 to 11, wherein the cleaning tube (7) is equipped with a flexible tip forming the free end (71) of said cleaning tube (7).

13. Cleaning device according to any of the claims 8 to 12, wherein the suction tube (14) comprises within it a duct (20) communicating with the suction source (21) and equipped, at the free end (141), with partitions (38) delimiting separate suction sections (20a).
